(19) Europäisches Patentamt
European Patent Office
Office européen des brevets

(11) **EP 0 570 304 B1**

(12) **FASCICULE DE BREVET EUROPEEN**

(45) Date de publication et mention
de la délivrance du brevet:
**29.12.1997 Bulletin 1997/52**

(51) Int Cl.⁶: **H02H 3/093**

(21) Numéro de dépôt: **93420168.2**

(22) Date de dépôt: **26.04.1993**

(54) **Déclencheur électronique comportant un dispositif de correction**

Elektronischer Schutzschalter mit Korrektureinrichtung

Electronic circuit breaker with correcting device

(84) Etats contractants désignés:
**DE GB IT SE**

(30) Priorité: **12.05.1992 FR 9205845**

(43) Date de publication de la demande:
**18.11.1993 Bulletin 1993/46**

(73) Titulaire: **SCHNEIDER ELECTRIC SA**
**92100 Boulogne Billancourt (FR)**

(72) Inventeurs:
- **Tripodi, Paul**
  **F-38050 Grenoble Cédex 09 (FR)**
- **Piney, Philippe**
  **F-38050 Grenoble Cédex 09 (FR)**
- **Fraisse, Didier**
  **F-38050 Grenoble Cédex 09 (FR)**
- **Dupuis, Yves**
  **F-38050 Grenoble Cédex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**EP-A- 0 302 470**       **EP-A- 0 525 428**
**WO-A-81/02496**        **US-A- 3 849 706**
**US-A- 4 432 031**       **US-A- 4 879 626**

- **IEEE TRANSACTIONS ON POWER DELIVERY
  vol. 7, no. 1, Janvier 1992, NEW YORK, US pages
  193 - 201 YALLA 'A Digital Multifunction
  Protective Relay'**
- **POWER ENGINEERING & AUTOMATION vol. 7,
  no. 2, Avril 1985, BERLIN, GERMANY pages 72 -
  76 SACHS ET AL. 'Computer-Aided
  Coordination of Overcurrent-Time Protection'**

## Description

L'invention concerne un déclencheur électronique comportant des moyens de mesure de courant parcourant des conducteurs à protéger par un disjoncteur électrique associé au déclencheur, les moyens de mesure de courant ayant une réponse non-linéaire, des moyens de détermination de seuils et de temporisation, et un premier ensemble électronique de traitement connecté aux moyens de mesure et de détermination de manière à recevoir des signaux d'entrée respectivement représentatifs du courant mesuré par les moyens de mesure, des seuils et des temporisations, le premier ensemble comportant des moyens de détermination d'une valeur représentative de la valeur efficace du courant mesuré, un second ensemble de traitement assurant des fonctions de déclenchement dépendant de la valeur efficace du courant mesuré, des seuils et des temporisations .

Dans les déclencheurs électroniques connus, les fonctions de déclenchement fournissent un ordre d'ouverture du disjoncteur lorsqu'au moins un courant qui traverse un pôle du disjoncteur dépasse un seuil de courant prédéterminé pendant un temps supérieur à celui correspondant à la courbe de déclenchement. Parmi ces fonctions, nous pouvons citer la fonction long retard, ou fonction thermique, et la fonction court retard ou fonction magnétique.

La fonction long retard a un seuil qui correspond au courant de réglage du disjoncteur et une temporisation de déclenchement inversement proportionnelle au carré du courant de défaut. La courbe de déclenchement est telle que le produit du carré du courant de défaut par le temps de déclenchement est égal à une valeur constante. Le réglage du seuil de courant et de la constante de temporisation sont généralement accessibles à l'utilisateur. La fonction court retard a un réglage de seuil supérieur et un réglage de temporisation plus court que ceux de la fonction long retard. Cette temporisation est soit en temps constant, soit comme pour la fonction long retard en temps inverse du carré du courant de défaut. Ces fonctions disposent également d'une mémoire dite thermique qui tient compte du passé du déclencheur même si un défaut de courte durée n'a pas donné lieu à un déclenchement. Outre les fonctions principales décrites plus haut , les déclencheurs électroniques peuvent comporter des fonctions auxiliaires telles que la protection contre les défauts homopolaires ou le déclenchement en cas de surchauffe du disjoncteur (contrôle des raccordements).

D'autres fonctions ne produisent pas de déclenchement comme l'affichage du courant, la commande de contact de délestage ou d'alarme, ou des fonctions de communication avec des appareils périphériques. L'architecture des déclencheurs électroniques suit généralement un modèle connu. La mesure du courant circulant dans les conducteurs principaux et le prélèvement de l'énergie de fonctionnement du déclencheur sont faits aux moyens de transformateurs de courant. Ils fournissent un courant secondaire de l'ordre de 0,1 Ampère pour un fonctionnement nominal. Ces courants secondaires sont mis en forme avant d'être mesurés et traités par une unité de traitement des fonctions de déclenchement.

Les déclencheurs électroniques doivent fonctionner à des niveaux de courant très supérieurs au courant nominal. Mais il arrive que pour certains calibres de disjoncteurs, les transformateurs de courant n'aient pas une réponse linéaire sur toute la gamme de mesure et de protection du déclencheur. Ces défauts sont dûs à la saturation du circuit magnétique des transformateurs à fort niveau de courant et à un manque des magnétisation à très bas niveau de courant. Ce manque de linéarité était acceptable lorsque les fonctions de déclenchement opéraient avec la valeur crête des courants et que les précisions des temporisations et des seuils étaient assez larges. De plus, les réponses en courant des transformateurs sur une grande plage de fonctionnement sont plus dégradées en valeur efficace qu'en valeur crête. Certaines solutions connues permettent de corriger partiellement ce type de défaut. Les documents EP-133.968 et EP-302470 décrivent notamment, pour une fonction long retard, un mode de fonctionnement en valeur efficace jusqu'à un certain seuil et en valeur crête au-dessus. Cette solution présente le défaut de ne pas être homogène et continue sur toute la durée de la fonction long retard. De plus, la valeur crête de remplacement au-dessus du seuil n'est pas corrigée. Le brevet US-4.870.532 propose un dispositif qui fait varier l'impédance de mesure en fonction du courant fourni par les transformateurs de courant. Cette solution s'applique aux valeurs crêtes ou instantanées du courant et nécessite des composants électroniques de puissance capables de laisser passer le courant des transformateurs de courant.

L'invention a pour but de procurer un déclencheur électronique utilisant les valeurs efficaces, comportant des moyens de correction permettant de garantir des fonctions de déclenchement conformes aux valeurs des courants primaires circulant dans les pôles principaux d'un disjoncteur.

Selon l'invention, le déclencheur électronique comporte :

-   des moyens de détermination de paramètres de correction pour corriger les effets de la non-linéarité de la réponse des moyens de mesure de courant sur la valeur efficace du courant mesuré, et
-   des moyens de correction d'au moins l'un parmi ladite valeur représentative de la valeur efficace du courant mesuré lesdits seuils et ladites temporisations en fonction des paramètres de correction et ladite valeur représentative de la valeur efficace du courant mesuré,

les moyens de correction fournissant à l'entrée du second ensemble des valeurs corrigées de la valeur efficace du courant, des seuils ou des temporisations.

Selon un développement de l'invention, les moyens de détermination des paramètres de correction comportent des moyens de stockage des paramètres de correction.

Dans un mode préférentiel de réalisation de l'invention, il comporte des moyens de stockage d'une pluralité de groupes de paramètres correspondant à une pluralité de types de correction et des moyens de sélection d'un groupe de paramètres en fonction du type de disjoncteur.

Selon un mode particulier de réalisation il comporte des moyens de comparaison de la valeur efficace du courant mesuré à des seuils de correction prédéterminés, de manière à définir des secteurs de correction, les moyens de détermination des paramètres de correction fournissant des paramètres différents pour chaque secteur.

Selon un développement du mode de réalisation de l'invention, les paramètres de correction constituent les coefficients d'un polynôme définissant les valeurs corrigées en fonction des signaux d'entrée.

Selon un mode différent de réalisation de l'invention les moyens de correction comportent des moyens d'amplification dont le gain est variable en fonction du signal d'entrée.

Les moyens de correction comportent, par exemple, une borne commune d'entrée et de sortie connectée à l'entrée du second ensemble de traitement , ladite borne étant reliée par un premier interrupteur à l'entrée de moyens de mémorisation, dont la sortie est connectée à l'entrée des moyens d'amplification , et par un second interrupteur à la sortie des moyens d'amplification, les moyens de correction comportant des moyens de commande des interrupteurs, de manière à ce que l'un soit ouvert lorsque l'autre est fermé.

Lorsque le disjoncteur comporte une pluralité de pôles, les paramètres de correction peuvent être modifiés en fonction du nombres de pôles traversés par des courants supérieurs à des seuils prédéterminés.

Pour améliorer la correction, il est possible de prévoir des moyens de mesure de la température, les moyens de correction corrigeant les signaux d'entrée au moyen de paramètres de correction dépendant de ladite température.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels:

La figure 1 représente un schéma-bloc simplifié d'un disjoncteur dans lequel un déclencheur comportant l'invention peut être mis en oeuvre.

La figure 2 représente un schéma-bloc d'un déclencheur électronique de type connu.

La figure 3 représente un schéma-bloc d'un déclencheur dans lequel l'invention est mise en oeuvre.

La figure 4 représente la courbe de réponse d'un transformateur de courant présentant des défauts de linéarité.

La figure 5 donne une représentation en pourcentage des erreurs produites par les non-linéarités des transformateurs de courant.

La figure 6 représente des courbes de non-linéarité en fonction des courants élevés au carré et des secteurs de correction.

La figure 7 montre un organigramme de traitement d'une correction correspondant aux courbes de la figure 6.

La figure 8 montre un schéma d'un mode de réalisation analogique de l'invention.

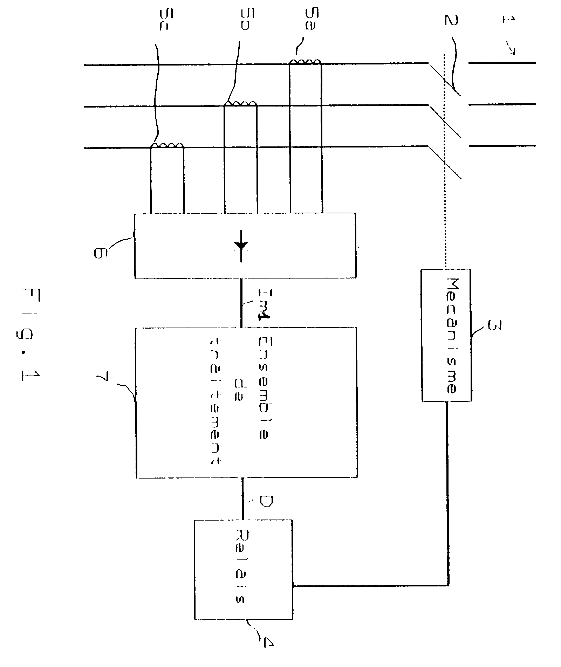

La figure 1 représente le schéma-bloc d'un disjoncteur de type connu. Le réseau électrique 1 à protéger est composé de conducteurs électriques. Des contacts 2 permettent d'établir ou d'interrompre le courant dans le réseau 1. Des transformateurs de courant 5a,5b,5c, associés aux conducteurs du réseau 1 transforment les courants primaires de forte intensité en courants secondaires de faibles valeurs compatibles avec les déclencheurs électroniques. Ces courants secondaires sont appliqués à l'entrée d'un circuit 6 de mise en forme et de mesure. Celui-ci fournit en sortie des signaux représentatifs mesurés Im1, qui sont appliqués à l'entrée d'un ensemble électronique 7 de traitement. Un ordre de déclenchement D produit par l'ensemble de traitement 7 est appliqué à l'entrée d'un relais de commande 4 qui actionne un mécanisme 3 d'ouverture des contacts 2 du disjoncteur.

Dans les déclencheurs de type connu, tel que celui représenté par le schéma-bloc de la figure 2, un ensemble 8 de traitement des fonctions de déclenchement reçoit d'une part, les courants mesurés Im1, et d'autre part, des consignes correspondant aux valeurs des seuils S de courant et aux constantes de temporisation T. Le temps de déclenchement est fonction des courants mesurés, des seuils de courant et des constantes de temporisation.

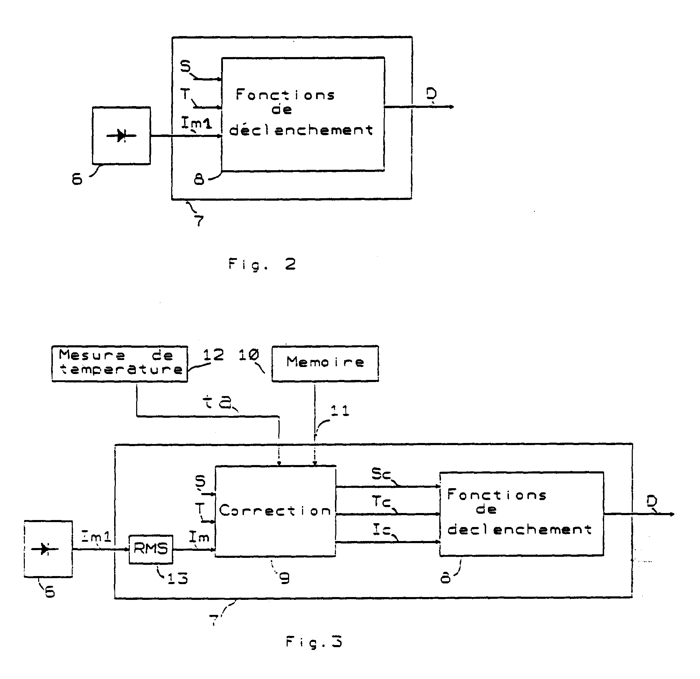

Selon l'invention, la correction a pour but de garantir des fonctions de déclenchement en terme de seuil de déclenchement et de temps de déclenchement. Le schéma-bloc d'un déclencheur comportant un dispositif de correction est représenté à la figure 3. L'ensemble 7 comporte un circuit 13 de calcul de la valeur efficace Im du courant mesuré Im1. Le dispositif 9 de correction peut transformer les valeurs efficaces des courants mesurés Im en courants corrigés Ic, les seuils de courant de réglage S en seuils corrigés Sc, et les constantes de temporisation T en constantes de temporisation corrigées Tc. La correction peut être faite sur un seul ou simultanément sur plusieurs de ces éléments, et peut être différente suivant la fonction du déclenchement.

Par exemple, pour une fonction long retard, la correction peut consister à fournir seulement un courant corrigé Ic en fonction de la valeur efficace du courant mesuré Im. Par contre, pour une fonction court retard, seul le seuil de déclenchement Sc peut être modifié en fonction de la valeur de son seuil initial S et du courant efficace Im. Les fonctions qui utilisent des temporisations en temps inverse, dans lesquelles le produit du carré du courant par le temps est égal à une constante, peuvent être corrigées en modifiant la constante de temps T en fonction du courant Im.

Ce dispositif de correction permet un fonctionnement homogène de l'ensemble 8 de traitement des fonctions de déclenchement, les valeurs corrigées Sc, Tc, Ic se substituant directement aux valeurs initiales S, T, Im. Pour que ces corrections soient efficaces, elles doivent être adaptées à chaque type de disjoncteur et à chaque calibre de transformateur de courant. Selon un mode préférentiel de réalisation, cette adaptation est effectuée au moyen d'un dispositif 10 de stockage des paramètres de correction 11, ces paramètres étant déterminés préalablement à partir des courbes obtenues lors d'essais.

La température de fonctionnement modifie la réponse en courant des transformateurs. De façon connue, certains disjoncteurs possèdent une mesure de la température interne du disjoncteur permettant un déclenchement lorsque l'échauffement dépasse un seuil prédéterminé. Un dispositif 12 de mesure de la température interne du disjoncteur fournit la valeur mesurée ta au dispositif 9, et peut participer à la correction des courants, des seuils ou des constantes de temporisation. Par exemple, lorsque la température dépasse un certain seuil, un facteur de correction prédéterminé est appliqué aux seuils S ou aux temporisations T de manière à les réduire. Un facteur de correction peut également être appliqué directement au courant de manière à l'augmenter.

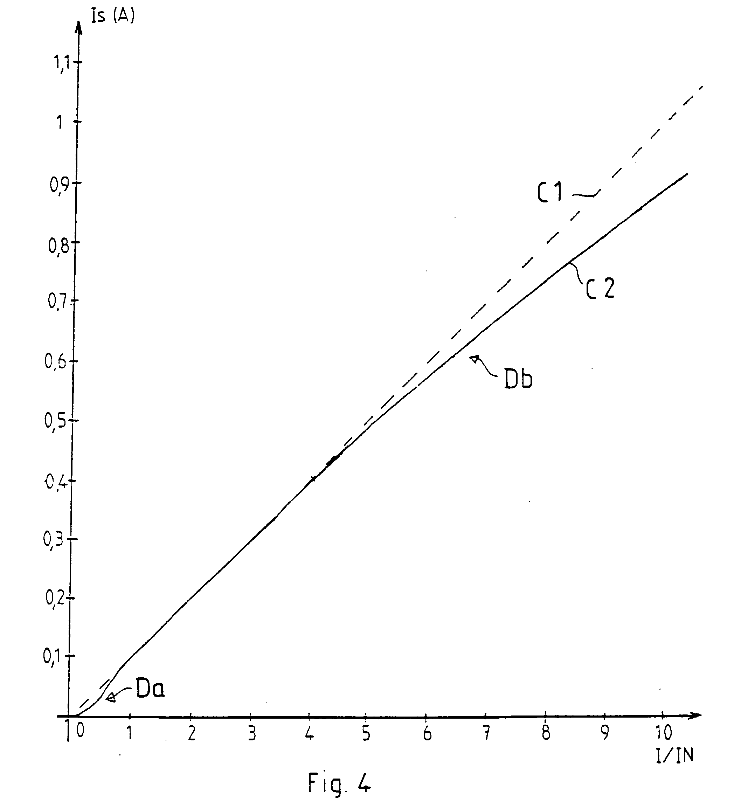

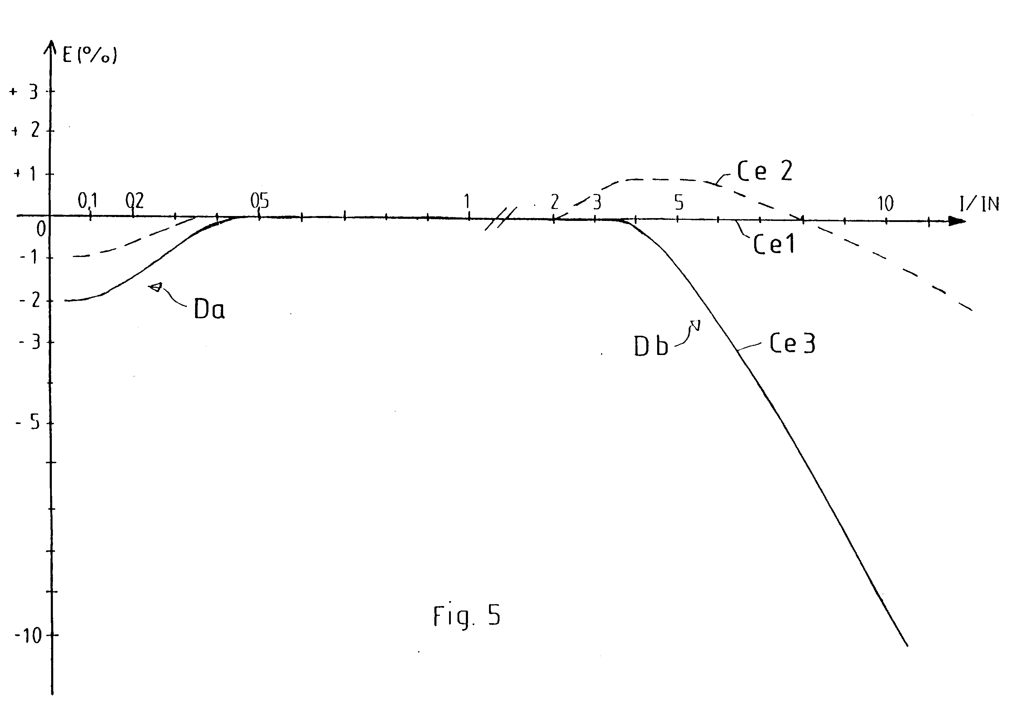

Une courbe C2 de réponse du courant secondaire Is d'un transformateur de courant est représentée sur la figure 4. Pour un courant primaire I égal au courant nominal IN du disjoncteur, le courant secondaire Is est égal à 0,1A. La courbe C2 présente deux zones d'atténuation Da et Db par rapport à une courbe théorique C1. La première zone de déformation Da apparait pour de faibles valeurs du courant. Ces déformations sont provoquées essentiellement par une faible magnétisation du circuit magnétique des transformateurs de courant, et par la faible tension générée sur l'enroulement secondaire rendant le courant Is très sensible aux variations de charge. La deuxième zone de déformation Db se situe pour de fortes valeurs de courant. Ces déformations sont dues essentiellement à la saturation du circuit magnétique des transformateurs de courant. Une autre représentation de la réponse des transformateurs est donnée en figure 5. Elle exprime en pourcentage l'erreur E par rapport à une courbe idéale Ce1. Certaines courbes de réponse, notamment en valeurs crête, Ce2 peuvent avoir des zones supérieures à la courbe idéale Ce1, alors que pour les réponses en valeurs efficaces, Ce3, les erreurs négatives sont très accentuées.

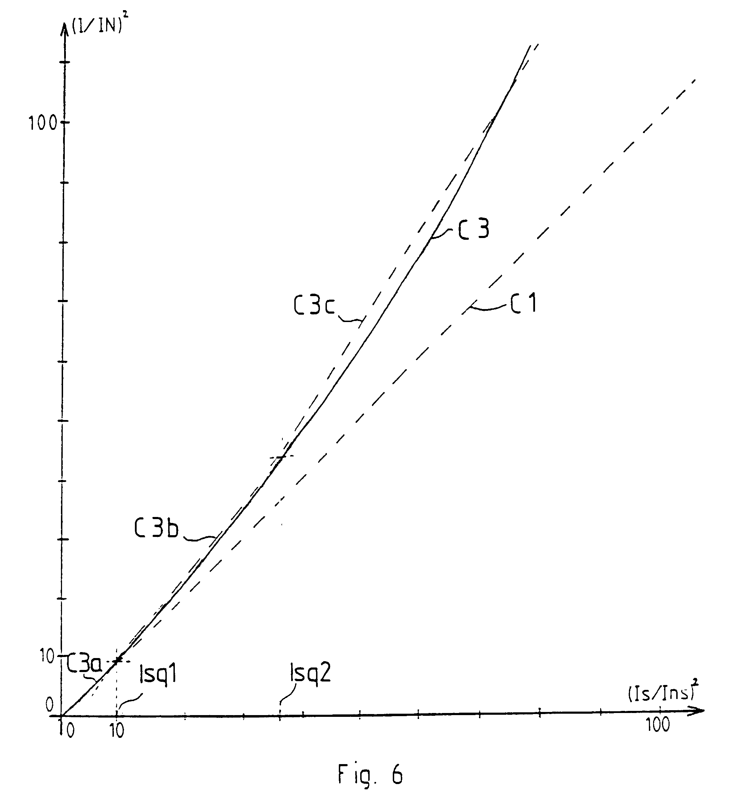

Les fonctions de déclenchement ont souvent besoin de la valeur du courant élevée au carré, notamment la fonction long retard pour la courbe de déclenchement en temps inverse. Il est alors préférable de pratiquer la correction directement sur la valeur du courant élevée au carré. la figure 6 montre une courbe C3 de non-linéarité représentant le carré du rapport du courant primaire I et du courant nominal IN en fonction du carré du rapport du courant secondaire Is et du courant secondaire nominal Ins. Les axes ont été inversés par rapport aux figures 4 et 5 pour permettre une analyse en fonction du courant secondaire. Selon un mode de réalisation particulier, la correction est effectuée par secteurs, le but étant de ramener la valeur du carré du courant de la courbe C3 le plus près possible de la courbe idéale C1. Pour déterminer les paramètres de correction, la courbe C3 a été modélisée pendant les essais en trois secteurs droits: C3a si la valeur de $(Is/Ins)^2$ est inférieure à un premier seuil Isq1, C3b si la valeur de $(Is/Ins)^2$ est comprise entre le premier seuil Isq1 et un second seuil Isq2, et C3c si la valeur de $(Is/Ins)^2$ est supérieure au second seuil Isq2. A l'intérieur de chaque secteur, les paramètres de correction ont été déterminés de manière à ramener la courbe C3a, C3b ou C3c correspondante sur la courbe C1. Dans chaque secteur la correction sera de la forme :

$$(Ic)^2 = An + Bn\,(Im)^2,$$

où An représente une constante et Bn un coefficient de proportionnalité. An et Bn font partie des paramètres de correction 11 fournis par le dispositif de stockage 10.

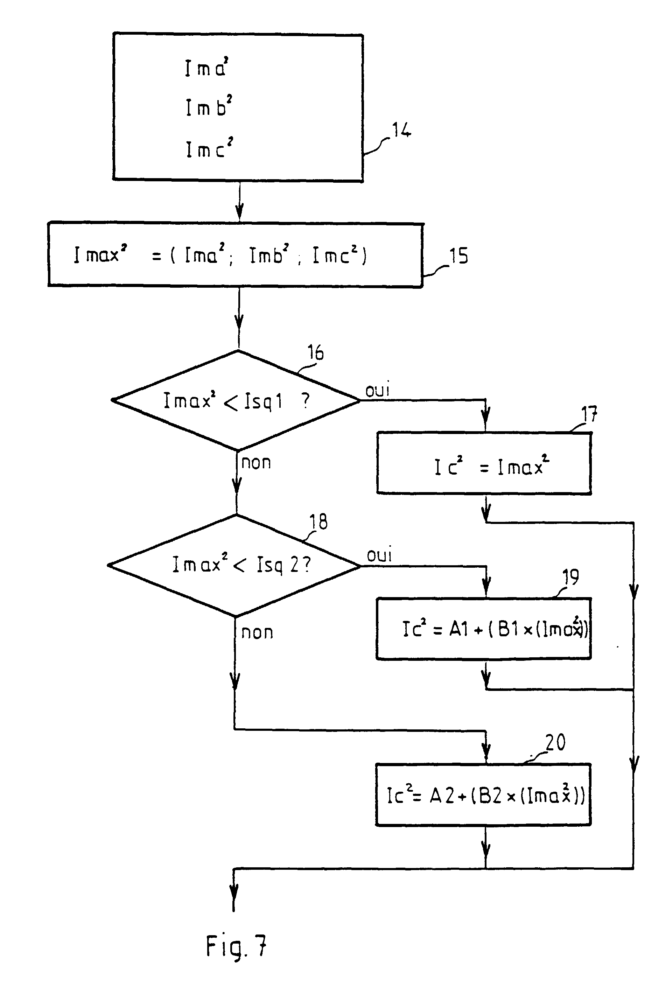

Un organigramme, d'un mode de réalisation en technologie numérique est représenté à la figure 7. les valeurs de $Ima^2$, $Imb^2$, $Imc^2$ sont représentatives des valeurs efficaces des courants secondaires mesurés par les transformateurs de courant 5a,5b,5c. L'acquisition de ces valeurs efficaces est effectuée à l'étape 14.

Dans le mode de réalisation représenté, la fonction de déclenchement utilise la valeur maximale des courants, la détection du courant maximum est effectuée à l'étape 15. La valeur $Imax^2$ est la valeur maximale parmi les valeurs $Ima^2$, $Imb^2$, $Imc^2$. $Imax^2$ étant déterminé, le traitement de la correction par secteur peut être pratiqué. La comparaison 16 entre $Imax^2$ et le premier seuil Isq1 oriente le traitement vers l'étape 17 si $Imax^2$ est inférieure à Isq1. Dans ce cas, la valeur corrigée $Ic^2$ est égale à la valeur initiale $Imax^2$. Sinon le traitement est orienté vers l'étape 18 où $Imax^2$ est comparé au second seuil Isq2. Si $Imax^2$ est alors inférieur au second seuil, Isq2, le traitement est orienté vers l'étape 19. La valeur corrigée $Ic^2$ est alors égale à la somme de la constante A1 et du produit du coefficient de correction B1 et de la valeur $Imax^2$. Dans le cas contraire, la valeur de $Imax^2$ est supérieure au deuxième seuil Isq2 et oriente le traitement vers l'étape 20. La correction est pratiquée de la même façon que pour l'étape 19, mais les paramètres sont différents, A2 étant la constante et B2 le coefficient de correction. A titre d'exemple pour corriger la courbe C3 représenté sur la figure 6, les paramètres utilisés sont :

A1 = -1,99; B1 = 1,3; A2 = -16,3; B2 = 1,7.

La correction n'est pas limitée au mode de réalisation illustré ci-dessus et peut être réalisée sous une forme polygonale par secteurs ou de façon intégrale sur toutes les valeurs de Im ou de $Imax^2$. La valeur corrigée $Ic^2$ peut s'écrire par exemple :

$$Ic^2 = a + b\,(Imax^2) + c\,(Imax^2)^2 \ldots$$

où a, b, c sont des paramètres de correction déterminés à partir de courbes relevées lors d'essais.

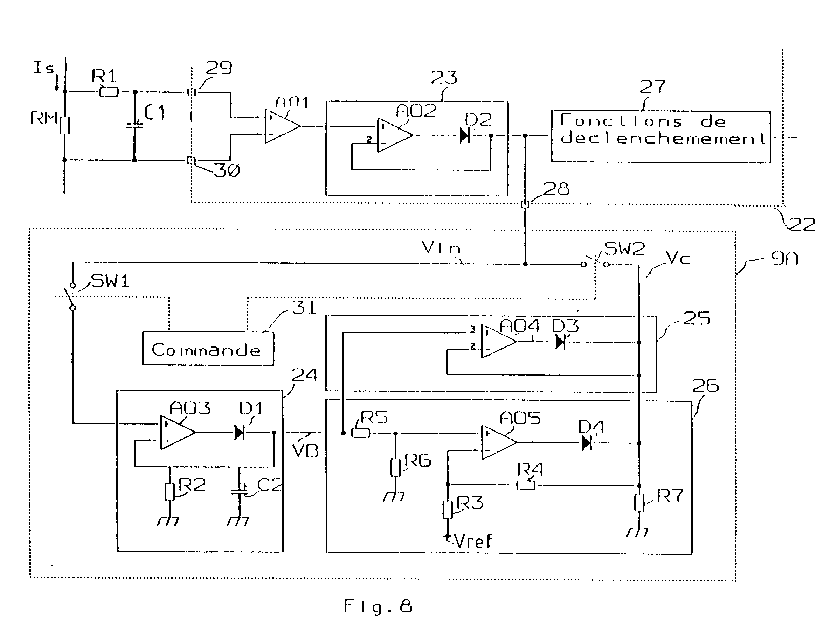

Un autre mode de réalisation peut utiliser des techniques analogiques. Les corrections sont alors effectuées avec des amplificateurs opérationnels ou des comparateurs. Le dispositif de correction peut alors s'insérer en série dans la chaîne de traitement ou, notamment lorsqu'on ne désire pas modifier un circuit analogique préexistant, en dérivation comme sur le schéma de la figure 8. Dans ce mode de réalisation, la valeur du courant est corrigée avant traitement par le circuit de traitement des fonctions de déclenchement 27. Le circuit 22 correspond à l'architecture d'un déclencheur de type connu, réalisé par exemple sous forme d'un circuit intégré ou d'un circuit hybride. Dans le mode de réalisation particulier représenté, le courant Is d'un des transformateurs de courant traverse une résistance de mesure RM. La tension générée sur RM est filtrée par une résistance R1 et un condensateur C1 de façon à présenter sur des bornes d'entrée 29 et 30 du circuit 22 une tension représentative de la valeur efficace du courant Is. Un amplificateur AO1 adapte cette tension d'entrée pour l'appliquer à un détecteur de maximum 23 comportant, de façon connue, par un amplificateur AO2 constitué par un amplificateur opérationnel dont l'entrée non-inverseuse est connectée à la sortie de l'amplificateur AO1, dont la sortie est connectée à l'anode d'une diode D2, et dont l'entrée inverseuse est connectée à la cathode de la diode D2 qui constitue la sortie du détecteur. La sortie du détecteur 23 est directement reliée à l'entrée du dispositif 27 de traitement des fonctions de déclenchement. Le dispositif de correction 9A est relié directement à la sortie du détecteur 23 par l'intermédiaire d'une borne 28. La connexion est réalisée au moyen de deux interrupteurs SW1 et SW2 contrôlés par un circuit de commande 31 et qui fonctionnent en alternance. Lorsque SW1 est fermé et SW2 ouvert, la valeur de la tension Vin de sortie du détecteur 23 est mémorisée par un détecteur de crête 24, comportant comme le détecteur 23, un amplificateur AO3 et une diode D1, et comportant de plus un circuit R2,C2, ayant une constante de temps élevée comportant une résistance et un condensateur en parallèle, connectés entre la sortie du détecteur de crête et la masse. La tension mémorisée VB obtenue en sortie du détecteur de crête 24 est appliquée à l'entrée de deux circuits de correction 25 et 26 dont les sorties sont connectées et fournissent une tension de sortie VC. Le premier circuit 25 effectue un transfert direct sans amplification de la tension VB. Sur la figure, le circuit 25 est un détecteur de maximum du même type que le détecteur 23, comportant un amplificateur AO4 et une diode D3. Si la tension Vb d'entrée du circuit 25 est supérieure à VC, alors VC prend la valeur de Vb sinon Vc garde sa valeur. Le second circuit 26 effectue une amplification de Vb si sa valeur est supérieure à un seuil de référence Vref. Le circuit 26 est également constitué par un détecteur de maximum mais avec amplification. n comporte un amplificateur AO5 et une diode D4 connectés de manière analogue à AO2 et D2. Des résistances R3,R4,R5 et R6 déterminent la valeur de l'amplification. La résistance R3 est connectée entre l'entrée non-inverseuse de l'amplificateur AO5 et la tension de référence Vref. La résistance R4 est intercalée dans la liaison entre l'entrée non non-inverseuse de l'amplificateur AO5 et la sortie du circuit 26. La résistance R5 est intercalée entre la sortie du circuit 24 et l'entrée inverseuse de l'amplificateur AO5 et la résistance R6 connecte l'entrée non-inverseuse à la masse. Si VB est supérieure à Vref, la tension Vc correspond à la valeur de Vb amplifiée par le circuit 26. Pour que cette valeur corrigée de Vc soit réinjectée dans la chaîne de traitement du déclencheur par la borne 28, l'interrupteur SW1 s'ouvre et l'interrupteur SW2 se ferme. Il y a alors détection de la valeur maximum entre les sorties des circuits 23,25,26. Tant que la valeur de Vin est inférieure au seuil Vref, il y a transfert direct et lorsque Vin devient supérieure à Vref, il y a correction par amplification.

Pour un bon fonctionnement du dispositif de correction, la période de temps correspondant aux états fermés pour SW1 et ouvert pour SW2 doit être très inférieure à la période de temps correspondant aux états ouvert pour SW1 et fermé pour SW2. Un circuit 26 permet la correction d'un secteur. La mise en parallèle, Vb pour l'entrée et Vc pour la sortie, de plusieurs circuits 26 ayant des valeurs de vref différentes et des valeurs de résistances R3 à R6 différentes permet de corriger de façon appropriée plusieurs secteurs.

Les dispositifs de correction décrits ci-dessus sont adaptés aux déclencheurs électroniques en technologie numérique et analogique. La correction peut intervenir à plusieurs niveaux, notamment de façon individuelle sur les courants de chaque transformateur, de façon groupée sur le courant maximum, ou sur la valeur maximale élevée au carré. Pour les déclencheurs à technologie numérique, notamment lorsque les circuits 8,9 et 13 comportent un microprocesseur, le stockage des paramètres peut être effectué au moyen d'une mémoire auxiliaire de configuration. Dans un autre mode de réalisation, les paramètres correspondants à tous les types de correction correspondants à divers types de transformateurs recensés, peuvent être stockés dans la mémoire centrale du déclencheur et la sélection du type de correction peut être effectuée lors de la lecture du calibre dans la mémoire auxiliaire. D'autres modes de réalisation de la sélection des paramètres peuvent être mis en oeuvre notamment par la mesure de différentes tensions, la mesure de résistances, ou la lecture de différentes positions de commutateurs pouvant être sélectionnées. La réponse des transformateurs de courant est différente suivant la configuration des courants traversant le disjoncteur. Par exemple des courants très forts traversant deux pôles adjacents d'un disjoncteur conduisent à des non-linéarités plus fortes que si un seul pôle est traversé par un courant élevé. Selon un développement, le dispositif de correction peut modifier les paramètres de correction en fonction du nombre de pôles du disjoncteur parcourus par des courants supérieurs à des seuils prédéterminés.

**Revendications**

1. Déclencheur électronique comportant :

   - des moyens (5a,5b,5c) de mesure de courant parcourant des conducteurs à protéger par un disjoncteur électrique associé au déclencheur, les moyens de mesure de courant ayant une réponse non-linéaire, des moyens de détermination de seuils (S) et de temporisation (T), et un premier ensemble électronique de traitement (7) connecté aux moyens de mesure et de détermination de manière à recevoir des signaux d'entrée respectivement représentatifs du courant mesuré (Im1) par les moyens de mesure, des seuils (S) et des temporisations (T),

   le premier ensemble (7) comportant :

   - des moyens (13;R1,C1) de détermination d'une valeur (Im) représentative de la valeur efficace du courant mesuré,
   - un second ensemble (8;27) de traitement assurant des fonctions de déclenchement dépendant de la valeur efficace (Im) du courant mesuré, des seuils (S) et des temporisations (T),

   déclencheur caractérisé en ce qu'il comporte :

   - des moyens (10;R3-R6) de détermination de paramètres de correction pour corriger les effets de la non-linéarité de la réponse des moyens de mesure de courant sur la valeur efficace (Im) du courant mesuré, et
   - des moyens (9;9A) de correction d'au moins l'un parmi ladite valeur (Im) représentative de la valeur efficace du courant mesuré, lesdits seuils (S) et lesdites temporisations (T) en fonction des paramètres de correction et de ladite valeur (Im) représentative de la valeur efficace du courant mesuré,

   les moyens de correction (9;9A) fournissant à l'entrée du second ensemble (8;27) des valeurs corrigées de la valeur efficace du courant (Ic), des seuils (Sc) ou des temporisations (Tc).

2. Déclencheur selon la revendication 1, caractérisé en ce que les moyens de détermination des paramètres de correction comportent des moyens de stockage (10) des paramètres de correction (11).

3. Déclencheur selon la revendication 2, caractérisé en ce qu'il comporte des moyens de stockage d'une pluralité de groupes de paramètres correspondant à une pluralité de types de correction et des moyens de sélection d'un groupe de paramètres en fonction du type de disjoncteur.

4. Déclencheur selon l'une quelconque des revendications 1 à 3, caractérisé en ce qu'il comporte des moyens de comparaison de la valeur efficace du courant mesuré (Im) à des seuils de correction prédéterminés (Isq1, Isq2), de manière à définir des secteurs de correction, les moyens de détermination des paramètres de correction fournissant des paramètres différents pour chaque secteur.

5. Déclencheur selon l'une quelconque des revendications 1 à 3, caractérisé en ce que les paramètres de correction constituent les coefficients d'un polynôme définissant les valeurs corrigées en fonction des signaux d'entrée.

6. Déclencheur selon l'une quelconque des revendications 1 à 5, caractérisé en ce que le signal d'entrée représentatif de la valeur efficace du courant mesuré est proportionnel au carré de ladite valeur efficace.

7. Déclencheur selon l'une quelconque des revendications 1 à 5 caractérisé en ce que les moyens (9A) de correction comportent des moyens d'amplification (25,26) dont le gain est variable en fonction du signal d'entrée (Vin).

8. Déclencheur selon la revendication 7, caractérisé en ce que les moyens de correction (9A) comportent une borne (28) commune d'entrée et de sortie connectée à l'entrée du second ensemble de traitement (27), ladite borne étant reliée par un premier interrupteur (SW1) à l'entrée de moyens (24) de mémorisation, dont la sortie est connectée à l'entrée des moyens d'amplification , et par un second interrupteur (SW2) à la sortie des moyens d'amplification, les moyens de correction comportant des moyens (31) de commande des interrupteurs (SW1,SW2), de manière à ce que l'un soit ouvert lorsque l'autre est fermé.

**9.** Déclencheur selon l'une quelconque des revendications 1 à 8, caractérisé en ce que les disjoncteurs comportant une pluralité de pôles, les paramètres de correction (11) étant modifiés en fonction du nombres de pôles traversés par des courants supérieurs à des seuils prédéterminés.

**10.** Déclencheur selon l'une quelconque des revendications 1 à 9, caractérisé en ce qu'il comporte des moyens (12) de mesure de la température, les moyens de correction (9) corrigeant les signaux d'entrée au moyen de paramètres de correction dépendant de ladite température.

## Patentansprüche

**1.** Elektronischer Auslöser mit

- Mitteln (5a, 5b, 5c) zur Messung des Stroms in durch einen, dem Auslöser zugeordneten Leistungsschalter zu schützenden Leitern, wobei diese Strommeßmittel eine nichtlineare Charakteristik aufweisen, mit Mitteln zur Bestimmung von Ansprechwerten (S) und Zeitverzögerungswerten (T) sowie mit einer ersten elektronischen Verarbeitungsschaltung (7), die an die Meß- und Bestimmungsmittel angeschlossen ist, derart daß sie mit Eingangssignalen beaufschlagt wird, die den durch die Meßmittel gemessenen Strom (Im1), bzw. die Ansprechwerte (S) und Zeitverzögerungswerte (T) abbilden, wobei die erste Schaltung (7)
- Mittel (13; R1, C1) zur Bestimmung eines, den Effektivwert des gemessenen Stroms abbildenden Werts (Im) sowie eine zweite Verarbeitungsschaltung (8; 27) umfaßt, welche die vom Effektivwert (Im) des gemessenen Stroms, den Ansprechwerten (S) und den Zeitverzögerungswerten (T) abhängigen Auslösefunktionen gewährleistet,

dadurch gekennzeichnet, daß der Auslöser

- Mittel (10; R3-R6) zur Bestimmung der Korrekturparameter, um die Auswirkungen der nichtlinearen Charakteristik der Strommeßmittel auf den Effektivwert (Im) des gemessenen Stroms zu korrigieren, sowie
- Mittel (9; 9A) zur Korrektur mindestens eines der Werte aus dem, den genannten Effektivwert des gemessenen Stroms abbildenden Wert (Im), den genannten Ansprechwerten (S) und den genannten Zeitverzögerungen (T) in Abhängigkeit von den Korrekturparametern und dem genannten, den Effektivwert des gemessenen Stroms abbildenden Wert (Im) umfaßt,

wobei die Korrekturmittel (9; 9A) den Eingang der zweiten Verarbeitungsschaltung (8; 27) mit korrigierten Werten des Effektivwerts des Stroms (Ic), der Ansprechwerte (Sc) oder der Zeitverzögerungen (Tc) beaufschlagen.

**2.** Auslöser nach Anspruch 1, dadurch gekennzeichnet, daß die Mittel zur Bestimmung der Korrekturparameter Mittel (10) zur Speicherung der Korrekturparameter (11) umfassen.

**3.** Auslöser nach Anspruch 2, dadurch gekennzeichnet, daß er Mittel zur Speicherung mehrerer Parametergruppen, die jeweils mehreren Typen von Korrekturen zugeordnet sind, sowie Mittel zur Auswahl einer Parametergruppe in Abhängigkeit vom Typ des Leistungsschalters umfaßt.

**4.** Auslöser nach irgendeinem der Ansprüche 1 bis 3, dadurch gekennzeichnet, daß er zur Bestimmung von Korrekturbereichen Mittel zum Vergleich des Effektivwerts des gemessenen Stroms (Im) mit festgelegten Korrektur-Schwellwerten (Isq1, Isq2) umfaßt, wobei die Mittel zur Bestimmung der Korrekturparameter für jeden Bereich unterschiedliche Parameter liefern.

**5.** Auslöser nach irgendeinem der Ansprüche 1 bis 3, dadurch gekennzeichnet, daß die Korrekturparameter die Glieder eines Polynoms bilden, das die korrigierten Werte in Abhängigkeit von den Eingangssignalen definiert.

**6.** Auslöser nach irgendeinem der Ansprüche 1 bis 5, dadurch gekennzeichnet, daß das den Effektivwert des gemessenen Stroms abbildende Eingangssignal proportional zum Quadrat des genannten Effektivwerts ist.

**7.** Auslöser nach irgendeinem der Ansprüche 1 bis 5, dadurch gekennzeichnet, daß die Korrekturmittel (9A) Verstärkermittel (25, 26) umfassen, deren Verstärkungsfaktor in Abhängigkeit vom Eingangssignal (Vin) veränderbar ist.

**8.** Auslöser nach Anspruch 7, dadurch gekennzeichnet, daß die Korrekturmittel (9A) eine, an den Eingang der zweiten Verarbeitungsschaltung (27) angeschlossene gemeinsame Eingangs- und Ausgangsklemme (28) aufweisen, wobei die genannte Klemme über einen ersten Schalter (SW1) mit dem Eingang von Speichermitteln (24), deren Ausgang an den Eingang der Verstärkermittel angeschlossen ist, sowie über einen zweiten Schalter (SW2) mit dem Ausgang der Verstärkermittel verbunden ist und die Korrekturmittel Mittel (31) zur Ansteuerung der Schalter (SW1, SW2) umfassen, derart daß einer der Schalter eingeschaltet ist, wenn der jeweils andere ausgeschaltet ist.

9. Auslöser nach irgendeinem der Ansprüche 1 bis 8, dadurch gekennzeichnet, daß die Leistungsschalter mehrere Pole aufweisen und die Korrekturparameter (11) in Abhängigkeit von der Anzahl der Pole verändert werden, die von Strömen oberhalb bestimmter Schwellwerte durchflossen werden.

10. Auslöser nach irgendeinem der Ansprüche 1 bis 9, dadurch gekennzeichnet, daß er Temperaturmeßmittel (12) umfaßt, wobei die Mittel (9) zur Korrektur der Eingangssignale mit Hilfe von Korrekturparametern von der genannten Temperatur abhängen.

**Claims**

1. An electronic trip device comprising :

   - means (5a, 5b, 5c) for measuring the current flowing in conductors to be protected by an electrical circuit breaker associated to the trip device, these current measuring means having a non-linear response, means for determining thresholds (S) and time delays (T), and a first electronic processing unit (7) connected to the measuring and determining means in such a way as to receive input signals respectively representative of the current measured (Im1) by the measuring means, of the thresholds (S) and time delays (T),

   the first unit (7) comprising :

   - means (13; R1,C1) for determining a value (Im) representative of the rms value of the measured current,
   - a second processing unit (8; 27) performing tripping functions depending on the rms value (Im) of the measured current, of the thresholds (S) and time delays (T),

   a trip device characterized in that it comprises :

   - means (10; R3-R6) for determining correction parameters to correct the effects of the non-linearity of the response of the current measuring means on the rms value (Im) of the measured current, and
   - means (9; 9A) for correcting at least one from among said value (Im) representative of the rms value of the measured current, said thresholds (S) and said time delays (T), according to the correction parameters and to said value (Im) representative of the rms value of the measured current,

   the correcting means (9; 9A) supplying to the input of the second unit (8; 27) corrected values of the rms value of the current (Ic), the thresholds (Sc) or the time delays (Tc).

2. The trip device according to claim 1, characterized in that the means for determining the correction parameters comprise means (10) for storing the correction parameters (11).

3. The trip device according to claim 2, characterized in that it comprises means for storing a plurality of groups of parameters corresponding to a plurality of types of correction and means for selecting a group of parameters according to the type of circuit breaker.

4. The trip device according to any one of the claims 1 to 3, characterized in that it comprises means for comparing the rms value of the measured current (Im) with preset correction thresholds (Isq1, Isq2), so as to define correction sectors, the means for determining the correction parameters supplying different parameters for each sector.

5. The trip device according to any one of the claims 1 to 3, characterized in that the correction parameters constitute the coefficients of a polynomial defining the corrected values in terms of the input signals.

6. The trip device according to any one of the claims 1 to 5, characterized in that the input signal representative of the rms value of the measured current is proportional to the square of said rms value.

7. The trip device according to any one of the claims 1 to 5, characterized in that the correcting means (9A) comprise amplifying means (25, 26) whose gain is variable in terms of the input signal (Vin).

8. The trip device according to claim 7, characterized in that the correcting means (9A) comprise a common input and output terminal (28) connected to the input of the second processing unit (27), said terminal being connected by a first switch (SW1) to the input of storing means (24), whose output is connected to the input of the amplifying means, and by a second switch (SW2) to the output of the amplifying means, the correcting means comprising means (31) for controlling the switches (SW1, SW2), so that one is open when the other is closed.

9. The trip device according to any one of the claims 1 to 8, characterized in that the circuit breakers comprising a plurality of poles, the correction parameters (11) being modified according to the number of poles through which currents greater than preset thresholds are flowing.

10. The trip device according to any one of the claims 1 to 9, characterized in that it comprises means (12) for measuring the temperature, the correcting means (9) correcting the input signals by means of correction parameters dependent on said temperature.

Fig. 1

Fig. 2

Fig. 3

Fig. 4

Fig. 5

EP 0 570 304 B1

Fig. 6

$$Ima^2$$

$$Imb^2$$

$$Imc^2$$

14

$$Imax^2 = (Ima^2; Imb^2; Imc^2)$$

15

$$Imax^2 < Isq1 \ ?$$

16

oui

non

$$Ic^2 = Imax^2$$

17

$$Imax^2 < Isq2?$$

18

oui

non

$$Ic^2 = A1 + (B1 \times (Imax^2))$$

19

$$Ic^2 = A2 + (B2 \times (Imax^2))$$

20

Fig. 7

Fig. 8